# EUROPEAN PATENT APPLICATION

(11) **EP 0 899 598 A2**
(43) Date of publication of application: **03.03.1999**
(21) Application number: 98116432.0
(22) Date of filing: 31.08.1998
(51) Int. Cl.: G02B 26/12, G02B 5/09, G02B 7/182

(54) **Motor with a rotary polygonal mirror for a laser scanning unit**

(30) Priority: 30.08.1997 KR 9743711
(71) Applicant: Samsung Electronics Co., Ltd., Suwon-city, Kyungki-do (KR)
(72) Inventor: Park, Dong-Hoon, Yongin-shi, Kyonggi-do (KR)
(74) Representative: Grünecker, Kinkeldey, Stockmair & Schwanhäusser Anwaltssozietät

(57) **Abstract**

A motor with a rotary polygon mirror for a laser scanning unit of an electrophotographic device is provided. The motor includes: a board (1) on which a bearing support (3) is installed for accommodating a bearing (2); a rotary shaft (4), installed at the inner portion of the bearing (2), so that the rotary shaft (4) is enabled to rotate; a plurality of stators (5) fixed on said board wherein each of said stators (5) comprises a stator coil (6); and a rotor (7) being at its center fixed to said rotary shaft (4) and carrying a plurality of permanent magnets (9) being installed at a surface of the rotor for mutual cooperation with the stators wherein the polygonal mirror is formed as a reflection area on the outer surface of the rotor (7).

## Description

The invention relates to a motor with a rotary polygonal mirror for a laser scanning unit according to the preamble of claim 1.

With the development of an image output device such as laser beam printer (LBP) and a scanner, a laser scanning unit (LSU) becomes important. To meet the user's demands for high image quality and miniaturization of the product, the LSU is required to decrease in size.

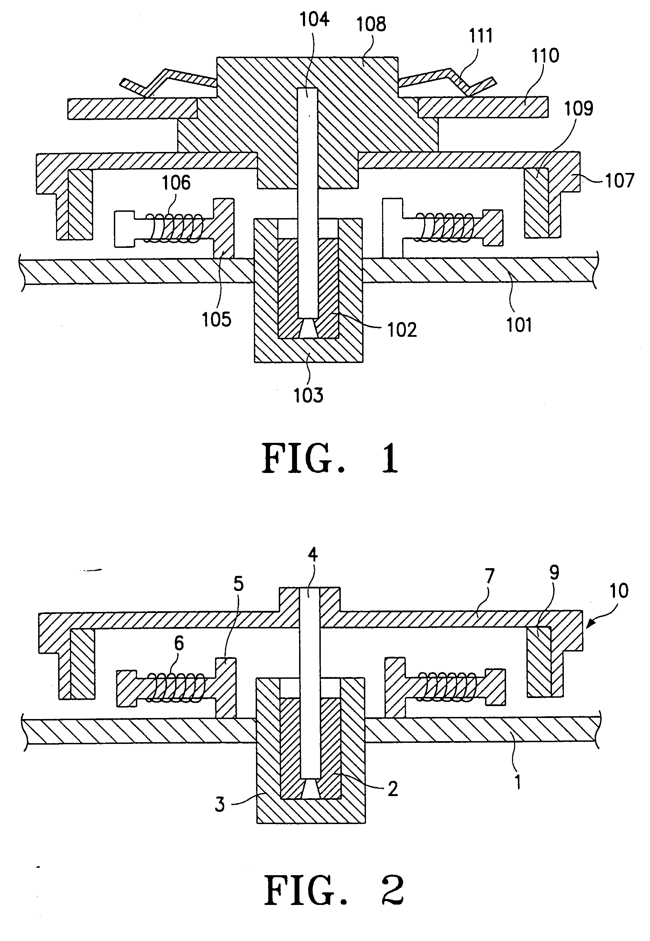

Fig. 1 illustrates a conventional scanner motor having a polygonal mirror installed thereon. A printed circuit board (PCB) 101 on which various circuit components are wired is provided to control a LSU. A bearing support 103 for supporting a bearing 102 installed therein is situated at a proper place of the PCB 101. A rotary shaft 104 is installed in the bearing 102 so that it can rotate. A plurality of stators 105 are radially fixed onto the PCB 101 with respect to said rotary shaft 104 at regular angular degrees. The stators 105 each are wound with a stator coil 106. A polygonal rotor 107 grooved inwardly is fixed to the rotary shaft 104 by using a fixing body 108. That is, the center of the polygonal rotor 107 is fixed at the bottom of the fixing body 108, and the fixing body 108 is fixed to the rotary shaft 104. A plurality of permanent magnets 109 are installed at the inner side of the rotor 107 so as to temporarily face the stators 105 when the rotor 107 rotates. A polygonal mirror 110 is installed at the upper side of the fixing body 108. A fixing clamp 111 for fixing the polygonal mirror 110 is installed on the polygonal mirror 110.

When a current is applied to the stators 105, the rotor 107 rotates together with the fixing body 108. Then the polygonal mirror 110 installed at the upper side of the fixing body 108 also rotates.

However, since the structure of the above-described scanner motor additionally includes the fixing body fixed to the rotor and to the polygonal mirror, and the fixing clamp for fixing the polygonal mirror, the total height of the LSU increases. The height of the LSU has a great effect on the total size of an electrophotographic output device. Furthermore, the fixing body and the fixing clamp deteriorate rotation stability.

It is the object of the invention to provide a scanner motor combined with a polygonal mirror, which can contribute to miniaturization and which can improve stability during its rotation.

This object is solved by the subject matter of claim 1. Advantageous embodiments of the invention are subject matters of the dependent claims.

The present invention will become more apparent from the following detailed description when taken in conjunction with the accompanying drawings in which:
Fig. 1 is a lateral cross-sectional view of a conventional scanner motor having a polygonal mirror is mounted thereon; and
Fig. 2 is a lateral cross-sectional view of a scanner motor combined with a polygonal mirror according to a preferred embodiment of the present invention.

Referring to Fig. 2, a printed circuit board (PCB) 1 in which various components are wired is provided to control an LSU. A bearing support 3 for supporting a bearing 2 installed therein is situated at a proper place of the PCB 1. A rotary shaft 4 is installed in the bearing 2 so that it can rotate. A plurality of stators 5 are radially fixed onto the PCB 1 with respect to said rotary shaft 4 at regular angular degrees. The stators 5 each are wound with a stator coil 6. A polygonal mirror reflection surface 10 is formed at the outer side of the rotor 7 so as to serve as a polygonal mirror. A plurality of permanent magnets 9 are installed at the inner side of the rotor 7. The permanent magnets 9 temporarily face the stators 5 when the rotor 7 rotates. The rotor 7 is made of aluminum or aluminium alloy.

When a current is applied to the stators 5, the rotary shaft 4 rotates and the rotor 7 fixed at the top of the rotary shaft 4 also rotates. Therefore, the polygonal mirror reflection surface 10 installed at the outer side of the rotor 7 rotates. That is, the polygonal mirror reflection surface 10 serves as the polygonal mirror.

As described above, the scanner motor forms the polygonal mirror reflection surface at the outer side of the rotor fixed to the rotary shaft without an additional fixing body. Therefore, it is possible to minimize the size of the product. Since the distance from the rotary shaft to the rotor is short, accuracy increases during high-speed rotation.

## Claims

1. A motor with a rotary polygonal mirror for a laser scanning unit of an electrophotographic device being driven by the motor, wherein the motor comprises:
a board (1) on which a bearing support (3) is installed for accommodating a bearing (2);
a rotary shaft (4), installed at the inner portion of the bearing (2), so that the rotary shaft (4) is enabled to rotate;
a plurality of stators (5) fixed on said board wherein each of said stators (5) comprises a stator coil (6); and
a rotor (7) being at its center fixed to said rotary shaft (4) and carrying a plurality of permanent magnets (9) being installed at a surface of the rotor for mutual cooperation with the stators
**characterized in that**
the polygonal mirror is formed as a reflection area on the outer surface of the rotor (7).

2. The motor according to claim 1, characterized in that the board is a printed circuit board on which various components are wired in order to control said laser scanning unit.

3. The motor according to claims 1 or 2, characterized in that said rotor (7) is made of aluminium or aluminium alloy.

4. The motor according to one of claims 1 to 3, characterized in that said stators (5) and said permanent magnets (9) are respectively installed to temporarily face each other, when the rotor (7) rotates.
